# EUROPÄISCHE PATENTSCHRIFT

(11) **EP 2 518 577 B1**
(45) Veröffentlichungstag und Bekanntmachung des Hinweises auf die Patenterteilung: **23.03.2016**
(21) Anmeldenummer: 12165361.2
(22) Anmeldetag: 24.04.2012
(51) Int. Cl.: G05B 23/02, F15B 13/043, G05B 19/042

(54) **Verfahren und Vorrichtung zum Betrieb eines Stellungsreglers, der sowohl digital als auch analog über eine einzige Stromschleife kommuniziert**
Method and device to operate a positioner that communicates in digital and in analogue way over a single current loop
Méthode et appareil pour faire fonctionner un positionneur avec la capacité de communiquer en mode digital et analogique à travers une seule boucle de courrant

(30) Priorität: 29.04.2011 DE 102011050007
(43) Veröffentlichungstag der Anmeldung: 31.10.2012
(73) Patentinhaber: Samson Aktiengesellschaft, 60314 Frankfurt (DE)
(72) Erfinder: Karte, Thomas, 64386 Bruchköbel (DE)
(74) Vertreter: Puschmann Borchert Bardehle Patentanwälte Partnerschaft mbB

(56) Entgegenhaltungen:
- EP-A1- 2 053 792
- EP-A2- 2 154 381
- US-A1- 2007 018 127
- Ali Riyaz: "Smart positioners in safety instrumented systems", EPTQ, 4. Januar 2006 (2006-01-04), Seiten 1-6, XP55034140, Gefunden im Internet: URL:http://www.documentation.emersonproces s.com/groups/public/documents/articles_art iclesreprints/d351027x012.pdf [gefunden am 2012-07-30]

## Beschreibung

Die Erfindung betrifft einen Stellungsregler für ein Stellgerät in einem sicherheitsgerichteten Kreis, gemäß dem Oberbegriff des Anspruchs 1 und ein Verfahren zum Betrieb des Stellungsreglers gemäß dem Oberbegriff des Anspruchs 12.

Nach dem Stand der Technik ist ein Stellungsregler für ein Stellgerät, umfassend eine Recheneinheit, eine Empfangseinheit für einen Sollwert, eine Ausgabeeinheit, insbesondere eine pneumatische Ausgabeeinheit, die mit einem Stellantrieb eines Stellgeräts verbindbar ist, bekannt. Zudem umfasst ein Stellungsregler eine Recheneinheit. Durch diese Recheneinheit können in Verbindung mit angeschlossenen Meßaufnehmern Diagnosedaten am Stellgerät erhoben werden. Ein derartiger Stellungsregler wird z.B. in EP 2 053792 A1 offenbart.

Aus dem Stand der Technik sind Stromschleifen zur Übertragung der Sollwerte für die Ventilstellung insbesondere in Form einer 4 - 20 mA Stromeinprägung bekannt.

Zusätzlich ist es möglich, ein digitales Signal in Form einer Frequenzmodulation der Stromübertragung zu übertragen. Dies kann beispielsweise in Form des HART - Protokolls erfolgen. Ein entsprechender Empfänger im Stellungsregler kann dann den übermittelten Befehl auswerten und über eine Recheneinheit die gewünschten Aktionen veranlassen. Zur Diagnose kann ein lokal am Stellgerät montierter Stellungsregler Diagnosedaten erheben und das Ergebnis mittels der digitalen Datenübertragung an eine übergeordnete Steuereinheit übertragen. Die Software des Stellungsreglers, der lokal am Stellgerät eingesetzt wird, um die Diagnosedaten zu erheben, ist in der Regel nicht nach der Norm IEC 61508 entwickelt. Daher kann die Zuverlässigkeit der durch die Diagnose ermittelten Ergebnisse in Zweifel gezogen werden.

Um eine zuverlässige Aussage der Diagnose zu erhalten, müssen die Messergebnisse an eine übergeordnete Steuerung übermittelt werden. Die Software der übergeordneten Steuerung ist entgegen der Software des Stellungsreglers in der Regel nach der IEC 61508 entwickelt.

Eine Möglichkeit, die Übertragung der Messergebnisse, insbesondere einer Wegmessung, an die übergeordnete Steuerung umzusetzen, ist es, eine zweite Stromschleife für diesen Zweck vorzusehen. Diese Lösung hat allerdings den Nachteil, dass eine zusätzliche Ausgestaltung einer nach IEC 61508 zertifizierten Rückmeldeeinrichtung die Gerätekosten bei weitem übersteigen würden.

Es ist Aufgabe der Erfindung eine zuverlässige Aussage über die tatsächliche Stellung bzw. den tatsächlichen Stellungsverlauf des Ventils zu erhalten, wobei die Umsetzung möglichst einfach robust und günstig sein soll, und eine nach IEC 61509 zertifizierte Auswertung ermöglicht werden soll.

Die Aufgabe wird für die Vorrichtung durch die kennzeichnenden Merkmale des Anspruchs 1 in Verbindung mit seinen Oberbegriffsmerkmalen gelöst, für das Verfahren durch die kennzeichnenden Merkmale des Anspruches 14 in Verbindung mit seinen Oberbegriffsmerkmalen.

Die Unteransprüche bilden eine vorteilhafte Weiterbildung der Erfindung.

In bekannter Weise umfasst ein Stellungsregler für ein Stellgerät eine Ausgabeeinheit, die mit dem Stellantrieb des Stellgeräts verbindbar ist. Ferner ist eine Recheneinheit, wenigstens zur Ansteuerung der Ausgabeeinheit, vorgesehen. Zudem weist der Stellungsregler eine einzige Zweileiter-Stromschleife auf, über welche der Stellungsregler an eine übergeordnete Steuerung angeschlossen ist. Die übergeordnete Steuerung prägt über diese Stromschleife einen Strom z.B. im Bereich von 4-20 mA ein. Dieser Strom signalisiert den Sollwert der Stellung des Stellgerätes und wird entsprechend vom Stellungsregler empfangen und ausgewertet.

Die Erfindung zeichnet sich dadurch aus, dass der Stellungsregler über diese einzige Zweileiter-Stromschleife an einer Spannungsquelle angeschlossen ist, und die Spannungsquelle der übergeordneten Steuerung zugeordnet ist. Die Zweileiter-Stromschleife ist stellungsreglerseitig an einen Strommodulator angeschlossen. Der Strommodulator, ist mit weiteren Komponenten des Stellungsreglers verbunden.

Der Strommodulator ist erfindungsgemäß durch eine am stellungsreglerseitigen Ende der Zweileiter-Stromschleife angeordnete steuerbare Stromquelle gebildet.

Erfindungsgemäß wird von der am stellungsreglerseitigen Ende der Zweileiter-Stromschleife vorgesehenen steuerbaren Stromquelle abhängig von dem Ergebnis der Wegmessung parametrierbar eine entsprechende Stromstärke durch die Recheneinheit eingeprägt.

Auf diese Weise kann über den Strommodulator ein Signal in Form einer entsprechend eingeprägten Stromstärke analog an die übergeordnete Steuerung übermittelt werden und dort über eine insbesondere IEC 61508 konform entwickelte Software zuverlässig ausgewertet werden.

Erfindungsgemäß ist das an die übergeordnete Steuereinheit übermittelte Signal ein durch Messwerterfassungskomponenten aufgenommener Messwert.

Zudem weist der Stellungsregler vorzugsweise eine Kommunikationseinheit für ein aufmoduliertes über die Zweileiter-Stromschleife übertragenes Digitalsignal auf. Durch dieses Digitalsignal können Stellungssollwerte an das Stellgerät übermittelt werden, was aufgrund der vorgeschlagenen Anschaltung über ein Analogsignal nicht mehr möglich ist, da die Zweileiter-Stromschleife bereits mit dem Ausgangssignal beaufschlagt ist. Das Digitalsignal wird über die Kommunikationseinheit in eine für die Recheneinheit verständliche Nachricht gewandelt.

Zu der digitalen Nachricht können entsprechende Stellungs-Sollwerte bzw. eine Sollwertabfolge auf der Recheneinheit hinterlegt sein. Gemäß dieser derart vorgegebenen Sollwerte kann dann die insbesondere pneumatische Ausgabeeinheit durch die Recheneinheit so angesteuert werden, dass die dem Sollwert entsprechende Stellung des Stellgeräts erreicht wird.

Diese Konfiguration ist vor allem zur Durchführung von "Partial Stroke Tests" - PST von Sicherheitsstellgeräten vorteilhaft. Hierbei werden in der Regel festgelegte Stellungs-Sollwerte, die einen Teilhub des Stellgeräts darstellen, angefahren. Zum Anfahren dieser Stellungs-Sollwerte, kann die Verfahrgeschwindigkeit des Stellgeräts sehr hoch sein, was eine genaue Wegaufnahme durch den Stellungsregler bzw. die diesem zur Verfügung stehenden Mitteln deutlich erschwert. Die Stellungssollwerte werden zeitunkritisch digital übermittelt und über die Recheneinheit schnell ausgeführt. Das zeitkritische Signal der Wegaufnahme kann analog auf die übergeordnete Steuereinheit übermittelt werden und dort IEC 61508 konform ausgewertet werden.

Auf der Recheneinheit können so die Stellungen des Stellgeräts auf dem Stellungsregler vorimplementiert sein und durch ein Digitalkommando ausgelöst werden. Da durch die Auslagerung des Stellsignals die analoge 4-20mA-Strommodulation nicht mehr zur Übertragung des Stellungssollwerts benötigt wird, kann diese erfindungsgemäß mit den von der Wegmesseinheit aufgenommenen zeitkritischen Wegmessdaten beaufschlagt werden. Diese können dann an die übergeordnete Steuereinheit übermittelt und von dieser ausgewertet werden. Die übergeordnete Steuerung, die nach IEC 61508 zertifiziert ist, kann zuverlässig die Funktion eines Sicherheitsstellgeräts überprüfen.

Da nur eine einzige Zweileiter-Stromschleife benötigt wird, kann dieser sicherheitsrelevante Test sehr kostengünstig und mit hoher Sicherheit umgesetzt werden.

Auf der Recheneinheit des Stellungsreglers können in besonders vorteilhafter Weise Testprozeduren zum Test des Stellgeräts hinterlegt sein. Diese Testprozeduren können ebenfalls durch ein Digitalkommando ausgelöst werden. Das Testergebnis kann durch die Auswertung angeschlossener Meßeinrichtungen entweder auf der Recheneinheit protokolliert werden und das Ergebnis digital übertragen werden oder bei zeitkritischen Anforderungen direkt an die übergeordnete Steuereinheit über die Zwei leiter-Stromschleife analog rückgemeldet werden.

In einer besonders vorteilhaften Ausgestaltung kann das Stellgerät und der Stellungsregler mit Komponenten für eine Wegerfassung ausgestattet sein. Der erfaßte Weg wird im Stellungsregler in ein 4-20 mA Signal gewandelt und an eine übergeordnete Steuerung, insbesondere eine SPS, übertragen und von dieser mit einer Zeitauflösung von weniger als 50 ms aufgezeichnet und ausgewertet. Die Umwandlung des Signales kann dabei durch eine analoge Elektronikschaltung erfolgen, die entsprechend IEC 61508 entwickelt und zertifiziert ist. Alternativ kann das Signal der Wegerfassung der Recheneinheit zugeführt werden, die dann die Stromquelle zur Übertragung der gewünschten Information entsprechend moduliert.

Dies hat zur Folge, dass auch die Abbildung der Wegmessung auf die eingeprägte Stromstärke mit einer mindestens gleichen Zeitauflösung erfolgt und die Komponenten des Stellungsreglers entsprechend ausgelegt sind.

Vorzugsweise kann durch die Spannungsquelle, die an die Zweileiter-Stromschleife angeschlossen ist, die Recheneinheit und eine pneumatische Ausgabeeinheit mit Energie versorgt werden. Alternativ kann dafür eine weitere Spannungsquelle vorgesehen sein.

Zusätzlich kann der Stellungsregler einen weiteren Spannungseingang aufweisen, über dessen Beaufschlagung die sicherheitsgerichtete Entlüftung des Ventils ausgelöst werden kann. Insbesondere ist eine Steuerspannung von 24 V für diesen Fall vorgesehen. Dies erlaubt einen zusätzlichen Sicherheitsmechanismus für das Stellgerät bereitzustellen. Eine Entlüftung des pneumatischen Antriebes kann dabei zum Beispiel entsprechend dem in der DE 4429401 beschriebenen Stand der Technik erfolgen.

Alternativ kann in einer besonders vorteilhaften Ausführungsform der Stellungsregler eine Sicherheitsschaltung umfassen, die bei einem Spannungsabfall der Versorgungsspannung der Zweileiter-Stromschleife auf Null Volt ein sicherheitsgerichtetes Entlüften des Stellgeräts auslöst.

Da in diesem Fall die Energiezufuhr zu dem Stellungsregler unterbunden ist, kann die Ventilbewegung durch eine Vorrichtung entsprechend DE 103 44 088 mit einem internen Energiespeicher beobachtet und in einem internen Datenspeicher netzausfallsicher abgelegt werden.

Schliesslich ist das sicherheitsgerichtete Entlüften auch über einen Befehl über das HART-Protokoll auslösbar.

Insbesondere ist die digitale frequenzmodulierte Kommunikation in Form des HART Protokolls umgesetzt.

Weiter betrifft die Erfindung ein Verfahren zum Betrieb eines Stellungsreglers eingeschlossen einer sicherheitsrelevanten Übertragung von im Stellungsregler aufgenommenen Messwerten an eine übergeordnete Steuereinheit. Erfindungsgemäß werden die Stellsignale von der übergeordneten Steuereinheit an den Stellungsregler digital übermittelt, wohingegen die Messwerte analog an eine übergeordnete Steuerung übermittelt werden. Dies erfolgt über eine einzige Zweileiter-Stromschleife, wodurch dieses Verfahren sehr kostengünstig durchgeführt werden kann und trotzdem ein hohes Maß an Genauigkeit und Zuverlässigkeit ermöglicht.

Vorzugsweise kann dieses Verfahren zum Betrieb eines Stellungsreglers vor allem zum Betrieb eines Sicherheits-Stellgerät angewandt werden. Dieses Verfahren eignet sich insbesondere für die Durchführung von "Partial Stroke Tests".

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:

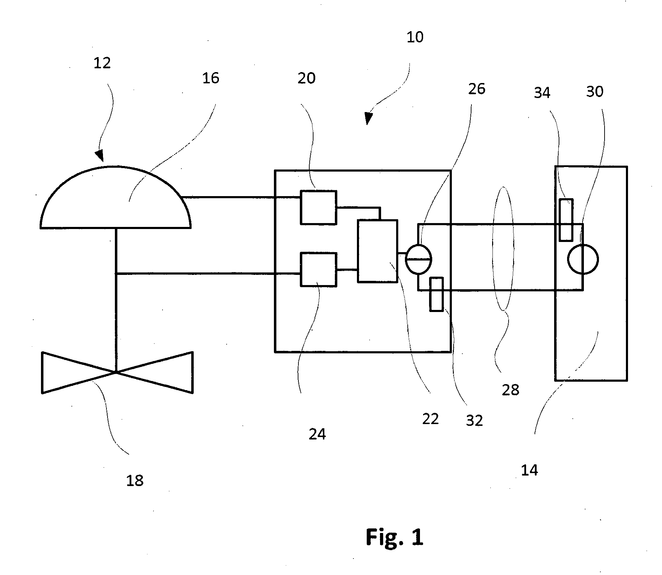

- Fig. 1: eine schematische Ansicht eines an ein Stellgerät und an ein Leitsystem angeschlossenen Stellungsregler

Fig. 1 zeigt die schematische Darstellung eines Stellgerätes 12, das über einen Stellungsregler 10 an ein übergeordnetes Leitsystem 14 angeschlossen und durch dieses steuerbar ist. Das Stellgerät 12 umfasst einen Antrieb 16 und eine Stellarmatur 18.

An dem Stellgerät 12 ist der Stellungsregler 10 angebracht, wobei der Antrieb 16 des Stellgeräts 12 mit einer pneumatischen Ausgabeeinheit 20 verbunden ist. Die pneumatische Ausgabeeinheit 20 wird von einer Recheneinheit 22 angesteuert. Ferner ist das Stellgerät 12 mit einer Wegmesseinrichtung 24, der ebenfalls in den Stellungsregler 10 integriert ist, verbunden.

Der Stellungsregler 10 ist mit dem Leitsystem 14 über eine einzige Zweileiter-Stromschleife 28 verbunden. Zur Versorgung der Zweileiter-Stromschleife 28 ist im Leitsystem 14 eine Spannungsquelle 30 vorgesehen. An der Zweileiter-Stromschleife 28 ist stellungsreglerseitig eine Stromquelle 26 vorgesehen.

Diese Stromquelle 26 ist von der Recheneinheit 22 derart ansteuerbar, dass sie abhängig von den gemessenen Signalen der Wegmesseinrichtung 24 eine entsprechende Stromstärke in die Zweileiter-Stromschleife 28 einprägt. In einer Ausführungsform wird ein Strom zwischen 4 und 20 mA eingeprägt.

Durch die Einprägung eines Stroms korrespondierend zum Ergebnis der Wegmessung des Stellgeräts 12 durch die Wegmesseinrichtung 24 kann der Stellungsverlauf des Stellgeräts 12 von dem Leitsystem 14 erfasst werden.

Das Leitsystem 14 ist mit einer Software ausgestattet, die entsprechend der IEC Norm 61508 entwickelt wurde. Auf diese Weise kann zuverlässig und aussagekräftig der Stellungsverlauf des Stellgerätes 12 protokolliert werden.

Zur Betätigung des Sicherheitsstellgeräts 12, insbesondere für einen "Partial Stroke Test" ist eine Kommunikation über die Zweileiter-Stromschleife 28 vorgesehen. Diese digitale Kommunikation erfolgt in Form HART-Kommandos, wofür Kommunikationseinrichtungen 32, 34 an die Zweileiter-Stromschleife angeschlossen sind. Diese HART-Kommandos werden beispielsweise zur Auslösung eines Partial Stroke Tests vom Leitsystem 14 ausgegeben und vom Stellungsregler 10 empfangen. Auf der Recheneinheit 22 des Stellungsreglers sind verschiedene Stellungen des Stellgerätes hinterlegt. Nach Auslösen, beispielsweise des Partial Stroke Tests, können diese Stellungen durch die Ansteuerung der pneumatischen Ausgabeeinheit 20 durch die Recheneinheit 22 eingefahren werden. Der tatsächliche Wegverlauf wird von der Wegmesseinrichtung 24 über die Recheneinheit 22 und die Stromquelle 26 an das Leitsystem 14 übermittelt.

Dadurch kann die Verifikation eines erfolgreich durchgeführten Partial Stroke Tests erfolgen. Bei dieser Ausführungsform wird nur eine Zweileiter-Stromschleife 28 benötigt, um zum einen den Partial Stroke Test an einem Stellgerät 12 durchzuführen und zum anderen den tatsächlichen Stellungsverlauf an das Leitsystem 14 zu übermitteln und von diesem über eine IEC 61508 zertifizierte Software protokolliert und ausgewertet zu werden.

### Bezugszeichenliste

- 10: Stellungsregler
- 12: Stellgerät
- 14: Leitsystem
- 16: Antrieb
- 18: Armatur
- 20: pneumatische Ausgabeeinheit
- 22: Recheneinheit
- 24: Wegerfassung
- 26: Stromquelle
- 28: Zweileiterstromschleife
- 30: Spannungsquelle
- 32: Kommunikationseinheit
- 34: Kommunikationseinheit

## Patentansprüche

1. Stellungsregler (10) für ein Stellgerät (12), umfassend eine Recheneinheit (22) und eine Ausgabeeinheit (20), die mit einem Stellantrieb (16) eines Stellgeräts (12) verbindbar ist, sowie eine Messeinrichtung (24), **dadurch gekennzeichnet, dass** der Stellungsregler (10) eine Stromquelle (26) umfasst, die steuerbar ausgebildet ist und einen Strom abhängig von einem Messparameter der Messeinrichtung (24) in eine einzige Zweileiter-Stromschleife (28) einprägt, wobei der Stellungsregler (10) über die einzige Zweileiter-Stromschleife (28) an eine Spannungsquelle (30) eines Leitsystems (14) anschließbar ist, so dass ein Messwert von der Stromquelle (26), an das Leitsystem übertragen wird, ferner weist der Stellungsregler (10) eine Kommunikationseinheit (32) auf, die ein vom Leitsystem (14) zum Stellungsregler über die Zweileiter-Stromschleife (28) übertragenes Digitalsignal auswertet.

2. Stellungsregler nach Anspruch 1, **dadurch gekennzeichnet, dass** die Messeinrichtung als Wegmesseinrichtung (24) ausgebildet ist und diese mit der steuerbaren Stromquelle (26) verbunden ist.

3. Stellungsregler nach einem der vorangehenden Ansprüche, **dadurch gekennzeichnet, dass** die Stromquelle (26) eine Stromstärke von 4 bis 20 mA in die Zweileiter-Stromschleife (28) einprägt.

4. Stellungsregler nach einem der vorangehenden Ansprüche, **dadurch gekennzeichnet, dass** die Recheneinheit (22) und die Ausgabeeinheit, die als pneumatische Ausgabeeinheit (20) ausgebildet ist, durch die Stromquelle (30) mit Energie versorgt werden.

5. Stellungsregler nach einem der vorangehenden Ansprüche, **dadurch gekennzeichnet, dass** wenigstens eine digitale Kommunikationseinheit (32,34) vorgesehen ist, die digitale Befehle über die Zweileiter-Stromschleife (28) auswertet und sendet.

6. Stellungsregler nach Anspruch 5, **dadurch gekennzeichnet, dass** die digitale Kommunikation durch eine Frequenzmodulation des Stromsignals der Zweileiter-Stromschleife (28) erfolgt.

7. Stellungsregler nach einem der Ansprüche 5 oder 6, **dadurch gekennzeichnet, dass** vordefinierte Stellungen des anzusteuernden Stellgeräts (12) im Stellungsregler (10) hinterlegt sind, die durch das digitale Kommunikationssignal über die Kommunikationseinheit (32, 34) einstellbar sind.

8. Stellungsregler nach einem der Ansprüche 5 bis 7, **dadurch gekennzeichnet, dass** die Kommunikationseinheit (32, 34) und die Recheneinheit (22) eine Baueinheit bilden.

9. Stellungsregler nach einem der Ansprüche 5 bis 8, **dadurch gekennzeichnet, dass** die digitale frequenzmodulierte Kommunikation in Form des HART Protokolls erfolgt.

10. Stellungsregler nach einem der Ansprüche 1 bis 9, **dadurch gekennzeichnet, dass** ein weiterer Spannungseingang vorgesehen ist, dessen Signal zur Auslösung der Zwangsentlüftung dient.

11. Stellungsregler nach einem der Ansprüche 1 bis 10, **dadurch gekennzeichnet, dass** ein interner Energiespeicher vorgesehen ist, um Messdaten einer Ventilbewegung auch im Moment der Abschaltung zu ermitteln, wobei diese nach Beendigung der Ventilbewegung in einem internen Speicher netzausfallsicher ablegbar sind.

12. Verfahren zum Betrieb eines Stellungsreglers (10) nach einem der vorangehenden Ansprüche, eingeschlossen einer Übertragung von im Stellungsregler (10) aufgenommenen Messwerten an ein übergeordnetes Leitsystem (14), **dadurch gekennzeichnet, dass** Stellsignale digital übermittelt werden, wohingegen Messdaten analog an ein übergeordnetes Leitsystem übermittelt werden, wobei digitale und analoge Signale über die gleiche ZweileiterstromSchleife übertragen werden.

13. Verfahren nach Anspruch 12, **dadurch gekennzeichnet, dass** die analoge Übermittlung einer vom Stellungsregler (10) aufgenommenen Messgröße durch die Einprägung einer Stromstärke in Abhängigkeit von einem Messwert durch eine steuerbare Stromquelle (26) über die Recheneinheit (22) erfolgt.

14. Verfahren nach einem der Ansprüche 12 oder 13, **dadurch gekennzeichnet, dass** ein digital übermitteltes Stellsignal einen "Partial Stroke Test" auslöst.

## Claims

1. Positioner (10) for an actuator (12), comprising an arithmetic unit (22) and an output unit (20) which latter can be connected to an actuating drive (16) of an actuator (12), as well as a measuring device (24) **characterized in that** said positioner (10) comprises a current source (26) which is designed to be controllable and impresses a current depending on a measuring parameter of the measuring device (24) into a single two-wire current loop (28), which positioner (10) can be connected to a voltage source (30) of a control system (14) via said single two-wire current loop (28) so that a measuring value from the current source (26) is transmitted to the control system, which positioner (10) furthermore includes a communication unit (32) which evaluates a digital signal transmitted from the control system (14) to the positioner via said two-wire current loop (28).

2. Positioner as claimed in claim 1 **characterized in that** the measuring device is provided in the form of a position sensor (24) which is connected to the controllable current source (26).

3. Positioner as claimed in one of the preceding claims **characterized in that** the current source (26) impresses a current of between 4 mA and 20 mA into said two-wire current loop (28).

4. Positioner as claimed in one of the preceding claims **characterized in that** the arithmetic unit (22) and the output unit, which is in the form of a pneumatic output unit (20), are supplied with power by the current source (30).

5. Positioner as claimed in one of the preceding claims **characterized in that** at least one digital communication unit (32,34) is provided which evaluates and transmits digital commands via the two-wire current loop (28).

6. Positioner as claimed in claim 5 **characterized in that** digital communication takes place by way of frequency modulation of the current signal from the two-wire current loop (28).

7. Positioner as claimed in one of claims 5 or 6 **characterized in that** predefined positions of the actuator (12) to be controlled are stored in the positioner (10), which positions can be set by the digital communication signal via the communication unit (32, 34).

8. Positioner as claimed in one of claims 5 to 7 **characterized in that** the communication unit (32, 34) and the arithmetic unit (22) form a unit.

9. Positioner as claimed in one of claims 5 to 8 **characterized in that** digital frequency-modulated communication takes place in the form of the HART protocol.

10. Positioner as claimed in one of claims 1 to 9 **characterized in that** a further voltage input is provided whose signal is used for triggering forced venting.

11. Positioner as claimed in one of claims 1 to 10 **characterized in that** an internal energy storage is provided to determine measuring data of a valve movement also at the time of switch-off, which data can be stored in a power-fail safe manner in an internal memory after completion of the valve movement.

12. Method for operating a positioner (10) as claimed in one of the preceding claims, including the transmission of measuring values captured by the positioner (10) to a subordinate control system, **characterized in that** control signals are transmitted in a digital form, whereas measuring data are transmitted to a subordinate control system in an analog form, with digital and analog signals being transmitted via the same two-wire current loop.

13. Method as claimed in claim 12 **characterized in that** the analog transmission of a measurand captured by the positioner (10) is accomplished by the impression of a current, as a function of a measured value, by a controllable current source (26) via the arithmetic unit (22).

14. Method as claimed in one of claims 12 to 13 **characterized in that** a digitally transmitted control signal triggers a "Partial Stroke Test".

## Revendications

1. Positionneur (10) pour un dispositif de positionnement (12) comprenant une unité de calcul (22) et une unité de sortie (20) qui peut être reliée à un actionneur (16) d'un dispositif de positionnement (12) ainsi qu'un dispositif de mesure (24), **caractérisé en ce que** le positionneur (10) comprend une source d'alimentation (26) qui est développée de manière à pouvoir être commandée et qui retient un courant en fonction des paramètres de mesure du dispositif de mesure (24) dans une boucle de courant unique (28) à deux conducteurs, le positionneur (10) pouvant être raccordé à l'aide une boucle de courant unique (28) à deux conducteurs à une source de tension (30) d'un système conducteur (14) de sorte qu'une valeur mesurée soit transmise au niveau du système conducteur par la source d'alimentation (26) ; par ailleurs le positionneur (10) présente une unité de communication (32) qui évalue un signal numérique transmis par le système conducteur (14) vers le positionneur par l'intermédiaire de la boucle de courant (28) à deux conducteurs.

2. Positionneur selon la revendication 1, **caractérisé en ce que** le dispositif de mesure se présente comme un dispositif de mesure de course (24) et celui-ci est relié à la source d'alimentation contrôlable (26).

3. Positionneur selon l'une quelconque des revendications précédentes, **caractérisé en ce que** la source d'alimentation (26) retient une intensité de courant de 4 à 20 mA dans la boucle de courant (28) à deux conducteurs.

4. Positionneur selon l'une quelconque des revendications précédentes, **caractérisé en ce que** l'unité de calcul (22) et l'unité de sortie qui se présente comme une unité de sortie (20) pneumatique sont alimentées en énergie par une source d'alimentation (30).

5. Positionneur selon l'une quelconque des revendications précédentes, **caractérisé en ce qu'**au moins une unité de communication numérique (32,34) est prévue, laquelle évalue et envoie les commandes numériques par l'intermédiaire de la boucle de courant (28) à deux conducteurs.

6. Positionneur selon la revendication 5, **caractérisé en ce que** la communication numérique se fait par une modulation de fréquence du signal électrique de la boucle de courant (28) à deux conducteurs.

7. Positionneur selon l'une quelconque des revendications 5 ou 6, **caractérisé en ce que** les positions prédéfinies du dispositif de positionnement (12) à commander sont spécifiées dans le positionneur (10), lesquelles peuvent être réglées à l'aide du signal de communication numérique par l'intermédiaire de l'unité de communication (32,34).

8. Positionneur selon l'une quelconque des revendications 5 à 7, **caractérisé en ce que** l'unité de communication (32,34) et l'unité du calcul (22) forment une unité modulaire.

9. Positionneur selon l'une quelconque des revendications 5 à 8, **caractérisé en ce que** la communication numérique modulée en fréquence se fait sous forme du protocole HART.

10. Positionneur selon l'une quelconque des revendications 1 à 9, **caractérisé en ce qu'**une autre entrée de tension est prévue dont le signal sert à déclencher le système de ventilation forcée.

11. Positionneur selon l'une quelconque des revendications 1 à 10, **caractérisé en ce qu'**un accumulateur d'énergie interne est prévu pour déterminer les données mesurées d'un mouvement du ventilateur également au moment de la mise hors tension, celles-ci pouvant être enregistrées après la fin du mouvement du ventilateur dans une mémoire interne à l'épreuve des coupures d'alimentation.

12. Procédé destiné au fonctionnement d'un positionneur (10) selon l'une quelconque des revendications précédentes, comprenant une transmission des valeurs mesurées enregistrées dans le positionneur (10) vers un système conducteur (14) superposé **caractérisé en ce que** des signaux de réglage sont transmis numériquement, alors que les données mesurées sont transmises de manière analogique à un système conducteur superposé, les signaux digitaux et analogues étant transmis via la même boucle de courant à deux conducteurs.

13. Procédé selon la revendication 12, **caractérisé en ce que** la transmission analogique d'une grandeur de mesure enregistrée par le positionneur (10) se fait en retenant une intensité de courant par l'intermédiaire de l'unité de calcul (22), en fonction d'une valeur mesurée par une source d'alimentation (26).

14. Procédé selon l'une quelconque des revendications 12 ou 13, **caractérisé en ce qu'**un signal de réglage transmis numériquement déclenche « un test de course partielle ».
